# EUROPEAN PATENT SPECIFICATION

(11) **EP 2 516 587 B1**
(45) Date of publication and mention of the grant of the patent: **11.03.2015**
(21) Application number: 10787972.8
(22) Date of filing: 30.11.2010
(51) Int. Cl.: C09K 11/64

(54) **NOVEL ALUMINOSILICATE BASED BLUE PERSISTENT PHOSPHORS**
NEUARTIGE BLAUE DAUERLEUCHTSTOFFE AUF ALUMINIUMSILIKATBASIS
NOUVEAUX LUMINOPHORES PERSISTANTS BLEUS À BASE D'ALUMINOSILICATE

(30) Priority: 21.12.2009 US 643150
(43) Date of publication of application: 31.10.2012
(73) Proprietor: SABIC Innovative Plastics IP B.V., 4612 PX Bergen op Zoom (NL)
(72) Inventor: CARMARDELLO, Sam Joseph, Saratoga Springs New York 12866 (US); COMANZO, Holly Ann, Niskayuna New York 12309 (US); SRIVASTAVA, Alok Mani, Niskayuna New York 12309 (US)
(74) Representative: Patentanwälte Bauer Vorberg Kayser
(86) International application number: PCT/US2010/058309
(87) International publication number: WO 2011/078940

(56) References cited:
- US-A1- 2009 152 497
- KUANG J Y ET AL: "Effects of RE3+ as a co-dopant in blue-emitting long-lasting phosphors, Sr3Al10SiO20:Eu2+", JOURNAL OF MATERIALS SCIENCE, KLUWER ACADEMIC PUBLISHERS, BO, vol. 41, no. 17, 20 June 2006 (2006-06-20) , pages 5500-5503, XP019399104, ISSN: 1573-4803, DOI: DOI:10.1007/S10853-006-0244-Z
- KUANG ET AL: "Blue-emitting long-lasting phosphor, Sr3Al10SiO20:Eu<2+>,Ho<3+>", SOLID STATE COMMUNICATIONS, PERGAMON, GB, vol. 136, no. 1, 1 October 2005 (2005-10-01), pages 6-10, XP005024167, ISSN: 0038-1098, DOI: DOI:10.1016/J.SSC.2005.06.030
- NAG A ET AL: "Photoluminescence due to efficient energy transfer from Ce<3+> to Tb<3+> and Mn<2+> in Sr3Al10SiO20", MATERIALS CHEMISTRY AND PHYSICS, ELSEVIER, SWITZERLAND, TAIWAN, REPUBLIC OF CHINA, vol. 91, no. 2-3, 15 June 2005 (2005-06-15), pages 524-531, XP004869825, ISSN: 0254-0584, DOI: DOI:10.1016/J.MATCHEMPHYS.2004.12.020
- SIVAKUMAR V ET AL: "Novel blue-emitting phosphor Sr2.979Eu0.021Al10-xBxSiO20 (x=0, 0.25, 0.5, 0.75 and 1) for PDP applications", JOURNAL OF LUMINESCENCE, AMSTERDAM, NL, vol. 129, no. 12, 1 December 2009 (2009-12-01), pages 1632-1636, XP026755056, ISSN: 0022-2313 [retrieved on 2009-11-11]

## Description

### FIELD OF THE INVENTION

The present invention relates to persistent phosphors having a long decay period, and in particular, to persistent phosphor compositions based on (Ba,Sr,Ca,K,Na)₃(Al,B,Ga,Co,Zn,Sc)₁₀₋ₓ(Si, Ge)₁₊ₓO₂₀₋ₓ,Nₓ:Eu²⁺, Er³⁺ and techniques for the manufacture and use of such phosphors.

### BACKGROUND OF THE INVENTION

A phosphor is a luminescent material that absorbs radiation energy in one portion of the electromagnetic spectrum and emits energy in another portion of the electromagnetic spectrum. One important class of phosphors includes crystalline inorganic compounds of very high chemical purity and of controlled composition, to which small quantities of other elements, called "activators," have been added for fluorescent emission. With the right combination of activators and inorganic compounds, the color of the emission of these crystalline phosphors can be controlled. Most useful and well-known phosphors emit radiation in the visible portion of the electromagnetic spectrum in response to excitation by electromagnetic energy outside the visible range. Well known phosphors have been used in mercury vapor discharge lamps to convert the ultraviolet (UV) radiation emitted by the excited mercury to visible light. Other phosphors are capable of emitting visible light upon being excited by electrons, useful in photomultiplier tubes, or X-rays, such as scintillators used in imaging systems.

One important property of phosphors is the decay time, e.g., the time required for the phosphor to stop emitting light after the excitation is removed. Most phosphor compositions have extremely short decay times, with most of the stored energy emitted as light within seconds, or even a small fraction of a second after excitation ends. These phosphors may be useful in lighting type applications where continuous excitation is present. However, in many applications it would be worthwhile to have a phosphorescent material that continues to emit light for long periods of time after excitation has ended.

Persistent phosphors based on Sr₃Al₁₀SiO₂₀ and doped with Ho³⁺, have been developed and commercialized to provide a blue persistent phosphor that has found wide application in both the aesthetic and functional markets, including, but not limited to entertainment, safety and emergency lighting and in exit signage. The applications of these materials are limited mainly due to their initial intensity and length of persistence as these materials have a relatively low initial intensity and decay relatively quickly. For example, blue-emitting long-lasting phosphors Sr₃Al₁₀SiO₂₀:Eu²⁺, Ho³⁺ have been prepared by a conventional high-temperature solid-state technique and their luminescent properties were investigated by Kuang et al. (Solid State Communications, Elsevier, Vol. 136, No. 1, 2005, pages 6-10). Furthermore, the effects of RE³⁺ as a co-dopant in blue-emitting long-lasting phosphors have been studied by J. Y. Kuang et al. (Journal of Materials Science, Springer Science + Business Media, Vol. 41, No. 17, 2006, pages 5500-5503), and the photoluminescence due to efficient energy transfer from dopants Ce³⁺ to Tb³⁺ and Mn²⁺ in Sr₃Al₁₀SiO₂₀ has been studied by A. Nag et al. (Materials Chemistry and Physics, Elsevier, Vol. 91, No. 2-3, 2005, pages 524-531). A series of blue-emitting phosphors Sr_{2.979}Eu_{0.021}Al₁₀₋ₓBₓSiO₂₀ (x=0, 0.25, 0.5, 075 and 1) have been synthesized and the emission intensity was found to be maximum for x=0.02 by Sivakumar et al. (Journal of Luminescence, Elsevier, Vol. 129, No. 12, 2009, pages 1632-1636). In addition, the effect of boron substitution in the Al site in Sr₃Al₁₀SiO₂₀:Eu²⁺ phosphor has been investigated.

Accordingly, it would be beneficial to provide a blue persistent phosphor having a higher initial intensity and slower rate of decay as compared to the prior art aluminosilicate based blue persistent phosphor materials. It would also be beneficial to provide methods of making these blue persistent phosphors as well as articles utilizing such persistent phosphors.

### BRIEF SUMMARY OF THE INVENTION

The present invention provides blue persistent phosphor materials having a higher initial intensity, a slower rate of decay and/or longer length of persistence. These phosphors are based on aluminosilicate that have been activated by the addition of combinations of lanthanoid metals, such as, but not limited to, europium, erbium, holmium, dysprosium, and neodymium. These phosphors have a higher initial intensity, a slower rate of decay and/or longer length of persistence as compared to the prior art.

Accordingly, in one aspect, the present invention provides a material including a phosphor having a general formula of, A₃M₁₀₋ₓC₁₊ₓ(O₂₀₋ₓNₓ):Eu, RE wherein A may be strontium (Sr), calcium (Ca), barium (Ba), potassium (K) or sodium (Na), or a combination thereof, M may be aluminum (Al), boron (B), zinc (Zn), cobalt (Co), gallium (Ga), scandium (Sc) or a combination thereof, and C may be silicon (Si) or germanium (Ge) or a combination thereof; x is between 0.001 and 5.0; and RE is dysprosium (Dy), neodymium (Nd), erbium (Er), holmium (Ho), terbium (Tm), ytterbium (Yb), samarium (Sm) or a combination thereof.

In another aspect, the present invention provides a method for producing a phosphor, the method including the steps of providing amounts of nitrogen-containing compounds, oxygen-containing compounds of europium, RE, or a co-precipated mixture of oxygen-containing compounds, at least one alkali metal or alkaline-earth metal selected from the group consisting of Ba, Sr, Ca, K, Na and combinations thereof, at least one metal or metalloid selected from the group consisting of Al, B, Zn, Co, Ga, Sc and combinations thereof, and at least one metal or metalloid selected from the group consisting of Si, Ge and combinations thereof, wherein RE is at least one of Dy, Nd, Er, Ho, Tm, Yb, Sm or a combination thereof; mixing together the compounds to form a mixture; and then firing the mixture at a temperature between about 900°C and about 1700°C under a reducing atmosphere for a sufficient period of time to convert the mixture to a phosphor having a general formula of, A₃M₁₀₋ₓC₁₊ₓ(O₂₀₋ₓNₓ):Eu, RE wherein A may be Ba, Sr, Ca, K, Na or a combination thereof, M may be Al, B, Zn, Co, Ga, Sc or a combination thereof, and C may be Si or Ge or a combination thereof; x is between 0.001 and 5.0; and RE is Dy, Nd, Er, Ho, Tm, Yb, Sm or a combination thereof.

In yet another aspect, the present invention provides an article of manufacture containing a phosphor, including a structure; and a phosphor having a general formula of A₃M₁₀₋ₓC₁₊ₓ(O₂₀₋ₓNₓ):Eu, RE wherein A may be Ba, Sr, Ca, K, Na or a combination thereof, M may be Al, B, Zn, Co, Ga, Sc or a combination thereof, and C may be Si or Ge or a combination thereof; x is between 0.001 and 5.0; and RE is Dy, Nd, Er, Ho, Tm, Yb, Sm or a combination thereof.

### BRIEF DESCRIPTION OF THE DRAWINGS

These and other features, aspects, and advantages of the present techniques will become better understood when the following detailed description is read with reference to the accompanying drawings in which like characters represent like parts throughout the drawings, wherein:
FIG. 1 is a graphical representation of the persistent intensity for a blue oxy-nitride based persistent phosphor made in accordance with embodiments of the present techniques and compared to a prior art oxide-based blue persistent phosphor.
FIG. 2 is a graphical representation of the persistent intensity for a blue oxy-nitride based persistent phosphor incorporating boron and made in accordance with embodiments of the present techniques and compared to a prior art oxide-based blue persistent phosphor also incorporating boron.

### DETAILED DESCRIPTION OF THE INVENTION

The present invention is more particularly described in the following description and example that are intended to be illustrative only since numerous modifications and variations therein will be apparent to those skilled in the art. As used in the specification and in the claims, the term "comprising" may include the embodiments "consisting of" and "consisting essentially of." All ranges disclosed herein are inclusive of the endpoints and are independently combinable. The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value.

The present invention addresses the problems of prior art materials and provides blue persistent phosphor materials having a higher initial intensity, a slower rate of decay and/or longer length of persistence. These phosphors are based on oxy-nitrides of aluminosilicates activated by the addition of combinations of lanthanoid metals, such as europium, dysprosium, neodymium, erbium, holmium, terbium, ytterbium, samarium or a combination thereof. In select embodiments, the phosphors are based on oxides or oxy-nitrides of aluminosilicates activated by the addition of europium and erbium.

The phosphors contained in embodiments of the present techniques may have a general formula of, A₃M₁₀₋ₓC₁₊ₓ(O₂₀₋ₓNₓ):Eu, RE wherein A may be Ba, Sr, Ca, K, Na or a combination thereof, M may be Al, B, Zn, Co, Ga, Sc or a combination thereof, and C may be Si or Ge or a combination thereof; x is between 0.001 and 5.0; and RE is Dy, Nd, Er, Ho, Tm, Yb, Sm or a combination thereof. Select embodiments utilize Sr, Al and Si. Other select embodiments utilize Sr, Si and a combination of Al and B. Phosphors made according to this formulation have a blue luminescence and a longer persistence than other types of phosphors.

The phosphors of the present invention are based on aluminosilicates wherein a small portion of the oxide component has been replaced by a nitride component. It has been found that these oxy-nitride embodiments provide better results than the oxide-based prior art phosphors. The amount of nitride substituted for oxide is relatively small, but the use of the nitride helps provide a phosphor having a higher initial intensity, a slower rate of decay and/or longer length of persistence as compared to oxide-based prior art phosphors. In one embodiment, the amount of nitride substituted for oxide is from 0.001 to 5.0 moles. In another embodiment, the amount of nitride substituted for oxide is from 0.001 to 3.0 moles. In still another embodiment, the amount of nitride substituted for oxide is from 0.001 to 2.0 moles.

The phosphors of the present invention are activated as per prior art phosphor materials using one or more lanthanoid metals. In one embodiment, europium is used along with erbium as the lanthanoid metals.

The phosphors of the present invention may be made using various techniques. In one embodiment, they may be made into particles of about 1 to 20 microns, or larger, using standard firing techniques.

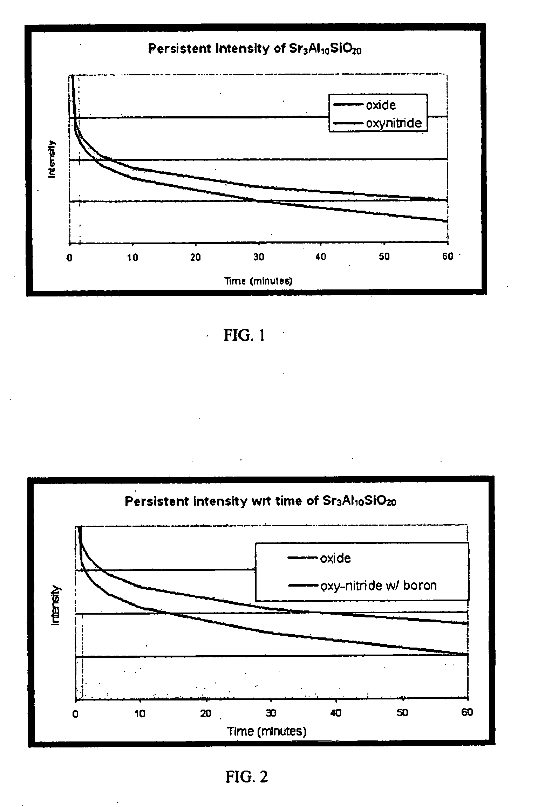

The benefits of an oxy-nitride persistent phosphor may be seen in FIG. 1 wherein a comparison of the persistent intensity over time of one embodiment of an oxy-nitride based blue persistent phosphor as compared to prior art oxide-based blue persistent phosphors is shown. In FIG. 1 it can be seen that for the oxide-based materials, these materials have a lower initial intensity and have a slightly faster rate of decay in that intensity. The persistence of phosphors made in accordance with the present techniques may also be longer than previous phosphors. Again, as seen in FIG. 1, while the value of the emission intensity at 1 hour is weak as compared to the initial intensity, the remaining intensity may still be strong enough to still be seen by the human eye in a totally dark environment.

The benefits of incorporating boron into the persistent phosphor, both oxide and oxy-nitride embodiments, may be seen in FIG. 2, which is described in greater detail in the accompanying examples. In FIG. 2, a comparison of the persistent intensity over time of an alternative embodiment of an oxy-nitride based blue persistent phosphor as compared to prior art oxide-based blue persistent phosphors may be seen wherein boron has been used in both. In these embodiments, part of the aluminum has been replaced with boron. Here, the oxide version shows a much slower rate of decay as compared to the oxide version without boron (FIG. 1), but the oxy-nitride embodiments again show an even slower rate of decay and, therefore, higher intensity after one hour. And, again, while the value of the emission intensity at 1 hour is weak as compared to the initial intensity, the remaining intensity may still be strong enough to still be seen by the human eye in a totally dark environment.

The persistent phosphors of the present techniques may be used in any number of applications requiring long term light in locations that have no energy source for powered lighting. In embodiments of the present techniques a plastic matrix may contain embedded particles of a persistent phosphor. In other embodiments, the phosphor particles may be incorporated into the plastic matrix of a film or surface layer attached to the body of a structure. In either of these embodiments, incorporation of the phosphor particles into the matrix or surface layer may be implemented using normal plastics processing techniques. Such techniques could include compression molding, injection molding, sheet forming, film blowing, or any other plastics processing technique that can incorporate a dry powder into a plastic matrix. One skilled in the art will recognize that the plastic matrix material used in these techniques may be any thermoplastic material with sufficient translucency to allow light transfer through thin layers, including, but not limited to, polystyrene, high impact polystyrene (HIPS), styrene-butadiene copolymers, polycarbonate, polyethylene, polyurethane, polyethylene terephthalate (PET), polyethylene terephthalate glycol (PETG), and polypropylene, among others. Furthermore, thermoset materials may also be used for the plastic matrix, including such compounds as silicon room temperature vulcanized (RTV) compounds and epoxies, among others. In embodiments, the phosphors are incorporated into the thermoset resins by mixing the phosphor with one of the two reactant portions. Further, the matrix does not need to be plastic. One of ordinary skill in the art will recognize that the phosphors of the present techniques may be incorporated into glass or ceramic matrices as well. Other applications include use in paints, tapes or other substrates such as textiles.

Particles of the phosphor may lack compatibility with the matrix leading to agglomeration during processing. This effect may be especially severe for smaller particles, such as nano-scale particles. For both types of phosphor particles, this effect may be lessened by coating the particles prior to incorporation in the matrix. The coating may include either small molecule ligands or polymeric ligands. Exemplary small molecule ligands may include octyl amine, oleic acid, trioctylphosphine oxide, or trialkoxysilane. Those skilled in the art will realize that other small molecule ligands may be used in addition to, or in place of, those listed here. The particles may also be coated with polymeric ligands, which may be either synthesized from the surface of the particles or added to the surface of the nano-scale particles.

In one embodiment, a particle is coated by growing polymer chains from the surface of the particle. In this embodiment, the particle may be functionalized by the addition of polymer initiation compounds to form polymer initiation sites on the particle. In certain embodiments, such polymer initiation compounds may include amines, carboxylic acids, or alkoxy silanes, among others. Those skilled in the art will recognize that other polymer initiation compounds may work in addition to, or in place of, those listed here. Once the particle has been functionalized with the initiation compounds, monomers may be added to the solution to grow polymeric or oligomeric chains from the initiation sites. The final size of the shell that is formed around the particle will depend on the number of initiation sites and the amount of monomer added to the solution. Those skilled in the art will recognize that these parameters may be adjusted for the results selected.

In an alternative embodiment, a particle is coated with a polymer. In this embodiment, the polymer chain may be chosen to interact with the particle, and may include random copolymers and block copolymers. In the latter embodiment, one monomer chain may be chosen to interact with the particle, while the other may be chosen to interact with the matrix. In certain embodiments, the polymer coating may include such groups as amines, carboxylic acids, and alkoxy silanes, among others. One of ordinary skill in the art will recognize that other functional groups may also be effective.

Fixing mixtures of precursor powders under a reducing atmosphere may produce the persistent phosphors of the present invention in various manners. In one embodiment, the persistent phosphors may be produced by mixing powders or coprecipitated mixtures of oxygen-containing compounds of europium, dysprosium, neodymium, erbium, holmium, terbium, ytterbium, samarium, an alkali metal or alkaline-earth metal, one or more group metal or metalloid elements, nitrogen-containing compounds and other metal oxygen-containing compounds, in accordance with the formulations shown above, and then firing the mixture under a reducing atmosphere. The oxygen-containing compounds may be but are not limited to, oxides, carbonates, nitrates, citrates, carboxylates, or combinations of these compounds. The nitrogen-containing compounds are solid nitrides.

In other embodiments, the mixture of starting materials for producing the phosphor may also include a flux. The flux, for example, may include materials such as, but not limited to, lithium tetraborate, lithium carbonate, boron oxide, or a mixture of these compounds.

The oxygen-containing compounds and the nitrogen-containing compounds may be mixed together by any appropriate mechanical method or chemical method. In one embodiment, such methods may include stirring or blending the powders in a high-speed blender, ball mill or a ribbon blender. Those skilled in the art will recognize that any number of other techniques may be used to make a well-blended mixture of powders.

The mixture of oxide powders and nitride powders may be fired in a reducing atmosphere at a temperature in a range from about 900°C to about 1,700°C for a time sufficient to convert the mixture to the phosphor. In one embodiment the temperature may be in the range from about 1300°C to about 1700°C. The firing may be conducted in a batch or continuous process, beneficially with stirring or mixing to promote good gas-solid contact. The firing time required may range from about one minute to ten hours, depending on the amount of the mixture being fired, the extent of contact between the solid and the gas of the atmosphere, and the degree of mixing while the mixture is fired or heated. The mixture may rapidly be brought to and held at the final temperature, or the mixture may be heated to the final temperature at a lower rate such as from about 1 °C/minute to about 200 °C/minute. In select embodiments, the temperature is raised to the final temperature at rates of about 3 °C/minute to about 25 °C/minute.

The firing is performed under a reducing atmosphere, which may include such compounds as hydrogen, carbon monoxide, ammonia, or a mixture of these compounds with an inert gas such as nitrogen, helium, argon, krypton, xenon, or a mixture thereof. In one embodiment, a mixture of hydrogen and nitrogen containing hydrogen in an amount from about 0.1 volume percent to about 10 volume percent may be used as a reducing gas. In another embodiment, the reducing gas may be carbon monoxide, generated *in situ* in the firing chamber by the reaction between residual oxygen and carbon particles placed in the firing chamber. In yet another embodiment, the reducing atmosphere is generated by the decomposition of ammonia or hydrazine.

The fired phosphor may be milled to form smaller particles and break up aggregates. The final phosphor may then be incorporated into the matrix to form the final product.

The phosphors of the present invention may be incorporated into numerous products used in low light applications. Such applications include, but are not limited to, cell phones and keyboards, such as in the keypad, front faceplate or in the controls attached to the faceplate. Additionally, the low toxicity of the phosphors of the present techniques makes applications such as textiles, toys and other commercial or consumer goods a possibility.

Furthermore, the long persistence of the phosphors of the present techniques makes them useful for applications in emergency equipment. Examples of such equipment include, but are not limited to, hard hats, stickers or decals applied to safety equipment, emergency exit signs, such as lettering or the sign itself, articles of clothing, such as in the fabric or in lettering or symbols applied to the clothing, and the like. In alternative embodiment, the phosphors may be included in lettering, such as an "EXIT" sign and may either be colored, so as to be visible at all times, or clear, so as to be visible only in low light conditions, when the glow from the incorporated phosphors may be visible.

The applications above are but a few examples of embodiments of the present techniques and are not intended to limit its application to those uses. Those skilled in the art will recognize that a long-lived persistent phosphor may be useful in a large variety of applications beyond the ones listed above.

The present invention is further illustrated by the following non-limiting examples.

### EXAMPLES

The present invention will now be illustrated in more detail by reference to the following specific, non-limiting examples. Unless otherwise indicated, all percentages are by weight.

This composition requires the starting materials be blended together. The intimate mixture of the aforementioned starting raw materials are placed in an open alumina crucible and heated to a temperature of 1450 deg C for a period of five hours in 1% forming gas.

One example of a composition according to the concepts of the present invention is (Sr_{2.96}Eu_{0.01}Er_{0.03})Al_{9.4}B_{0.4}Si_{1.2}O_{19.8}N_{0.2} Phosphor. In this example, 2.49 g of SrCO₃, 0.01g of Eu₂O₃, 0.03g of Er₂O₃, 2.73g of Al₂O₃, 0.14g H₃BO₃, 0.39g of SiO₂ and 0.04 g of Si₃N₄ were blended together to form a blue persistent phosphor according to one embodiment of the present invention. The intimate mixture of the aforementioned starting raw materials were placed in an open alumina crucible and heated to a temperature of 1450 deg C for a period of five hours in 1% forming gas.

On completion of the firing, the phosphor was obtained in the form of a sintered cake. This cake was reduced to a powder using a ball mill until the mean particle size (d50) reached the desired size. The resultant phosphor exhibited an improved initial intensity and longer persistence as compared to standard silicate analog. The oxy-nitride phosphor persistence was measured relative to the standard silicate phosphor. The results of the optical measurements are shown in Table 1 and graphically in FIG. 1.

**TABLE 1: PERSISTENT EFFICIENCY OF (Sr_{2.96}Eu_{0.01}Er_{0.03})Al_{9.4}B_{0.4}Si_{1.2}O₂₀ and (Sr_{2.96}Eu_{0.01}Er_{0.03})Al_{9.4}B_{0.4}Si_{1.2}O_{19.8}N_{0.2} PHOSPHOR**

| rime (min) | 1 | 2 | 5 | 10 | 30 | 60 | 480 |
|---|---|---|---|---|---|---|---|
| Silicate | 1 | 1 | 1 | 1 | 1 | 1 | 0.27 |
| Oxy-nitride | 2.37 | 2.51 | 2.77 | 3.02 | 3.98 | 6.32 | 0.34 |

| | | | | | | | |
|---|---|---|---|---|---|---|---|
| *relative to standard intensity wrt time (minutes) | | | | | | | |

Table 1 shows that phosphors produced with the oxy-nitride composition have an initial intensity and persistent emission exceeding that of the standard silicate sample as well as a slightly lower rate of decay. As such, the initial efficiency of the resultant phosphor exceeds that of the standard composition. In addition, the persistent intensity also exceeds that of the standard composition.

In various embodiments, a material comprises a phosphor comprising a general formula of: A₃M₁₀₋ₓC₁₊ₓ(O₂₀₋ₓNₓ):Eu, RE, wherein A is Ba, Sr, Ca, K, Na or a combination thereof, M is Al, B, Zn, Co, Ga, Sc or a combination thereof, C is Si or Ge or a combination thereof; x is between 0.001 and 5.0; and RE is Dy, Nd, Er, Ho, Tm, Yb, Sm or a combination thereof.

In another embodiment, a material comprises a phosphor comprising a general formula of: A₃M₁₀C₁(O₂₀):Eu, Er, wherein A is Ba, Sr, Ca, K, Na or a combination thereof, M is Al, B, Zn, Co, Ga, Sc or a combination thereof, and C is Si or Ge or a combination thereof.

In some embodiments, a method for producing a phosphor comprises: providing amounts of nitrogen-containing compounds, oxygen-containing compounds of europium, RE, or a co-precipated mixture of oxygen-containing compounds, at least one alkali metal or alkaline-earth metal selected from the group consisting of Ba, Sr, Ca, K, Na and combinations thereof, at least one metal selected from the group consisting of Al, B, Zn, Co, Ga, Sc and combinations thereof, and at least one metal selected from the group consisting of Si, Ge and combinations thereof, wherein RE is at least one of Dy, Nd, Er, Ho, Tm, Yb, Sm; mixing together the compounds to form a mixture; and then firing the mixture at a temperature between about 900°C and about 1700°C under a reducing atmosphere for a sufficient period of time to convert the mixture to a phosphor comprising a general formula of: A₃M₁₀₋ₓC₁₊ₓ(O₂₀₋ₓNₓ):Eu, RE, wherein A is Ba, Sr, Ca, K, Na or a combination thereof, M is Al, B, Zn, Co, Ga, Sc or a combination thereof, C is Si or Ge or a combination thereof; x is between 0.001 and 5.0; and RE is Dy, Nd, Er, Ho, Tm, Yb, Sm or a combination thereof.

In an embodiment, an article of manufacture containing a phosphor comprises: a structure; and a phosphor comprising a general formula of: A₃M₁₀₋ₓC₁₊ₓ(O₂₀₋ₓNₓ):Eu, RE, wherein A can be Ba, Sr, Ca, K, Na or a combination thereof, M can be Al, B, Zn, Co, Ga, Sc or a combination thereof, C can be Si or Ge or a combination thereof; x can be between 0.001 and 5.0; and RE can be Dy, Nd, Er, Ho, Tm, Yb, Sm or a combination thereof.

In another embodiment, an article of manufacture containing a phosphor comprises: a structure; and a phosphor comprising a general formula of: A₃M₁₀C₁(O₂₀):Eu, Er, wherein A can be Ba, Sr, Ca, K, Na or a combination thereof, M can be Al, B, Zn, Co, Ga, Sc or a combination thereof, and C can be Si or Ge or a combination thereof.

In the various embodiments: in a phosphor comprising a general formula of A₃M₁₀₋ₓC₁₊ₓ(O₂₀₋ₓNₓ):Eu, RE, (i) A can be Sr, M can be Al and C can be Si; or (ii) A can be Sr, C can be Si and M can be a combination of Al and B; and/or (iii) RE can be Er; (iv) the phosphor can have the formula: (Sr_{2.96}Eu_{0.01}Er_{0.03})Al_{9.4}B_{0.4}Si_{1.2}O_{19.8}N_{0.2}; and/or in a method for producing a phosphor, (v) the oxygen-containing compounds can be selected from the group consisting of oxides, carbonates, citrates, carboxylates, and combinations thereof; and/or (vi) the nitrogen-containing compounds comprises a solid nitride; and/or in an article of manufacture, (vii) the structure can be selected from the group consisting of safety equipment, toys, input devices, signs, emergency exit indicators, instrument panel controls, electrical switches, circuit breaker switches, furniture, communication devices, wristwatch faces, cell phones, keyboards, numbers on a wristwatch face, clock faces, numbers on a clock face, kitchen ware, utensils, labels, car dashboard controls, stair treads, clothing, lamps, weapon sights, a textile and displays; and/or (viii) the phosphor can be incorporated into the material of the structure; and/or (ix) the phosphor can be incorporated into a film attached to the structure; and/or (x) the phosphor can be incorporated into a paint composition applied to the structure; and/or (xi) the structure can comprise a thermoplastic matrix selected from the group consisting of polystyrene, high impact polystyrene (HIPS), styrene-butadiene copolymer, polycarbonate, polyethylene, polyurethane, polyethylene terephthalate (PET), polyethylene terephthalate glycol (PETG), polypropylene, and combinations thereof; (xii) the structure can comprise a thermoset plastic matrix selected from the group consisting of silicone RTV resin, epoxy resin, polyester, phenol-formaldehyde resin, melamine, and combinations thereof; and/or (xiii) the structure can comprise a glass, a ceramic, or a combination thereof.

## Claims

1. A material comprising a phosphor comprising a general formula of:
A₃M₁₀₋ₓC₁₊ₓ(O₂₀₋ₓNₓ):Eu, RE
wherein A is Ba, Sr, Ca, K, Na or a combination thereof,
M is Al, B, Zn, Co, Ga, Sc or a combination thereof,
C is Si or Ge or a combination thereof;
x is between 0.001 and 5.0; and
RE is Dy, Nd, Er, Ho, Tm, Yb, Sm or a combination thereof.

2. A material comprising a phosphor comprising a general formula of:
A₃M₁₀C₁(O₂₀):Eu, Er
wherein A is Sr, M is a combination of Al and B, and C is Si.

3. The material of claim 1, wherein A is Sr, M is Al and C is Si.

4. The material of claim 1, wherein A is Sr, C is Si, and M is a combination of Al and B.

5. The material of any of claims 1, 3 and 4, wherein RE is Er.

6. The material of claim 1, wherein the phosphor has the formula:
(Sr_{2.96}Eu_{0.01}Er_{0.03})Al_{9.4}B_{0.4}Si_{1.2}O_{19.8}N_{0.2}.

7. A method for producing a phosphor, the method comprising:
providing amounts of nitrogen-containing compounds, oxygen-containing compounds of europium, RE, or a co-precipated mixture of oxygen-containing compounds, at least one alkali metal or alkaline-earth metal selected from the group consisting of Ba, Sr, Ca, K, Na and combinations thereof, at least one metal selected from the group consisting of Al, B, Zn, Co, Ga, Sc and combinations thereof, and at least one metal selected from the group consisting of Si, Ge and combinations there of, wherein RE is at least one of Dy, Nd, Er, Ho, Tm, Yb, Sm;
mixing together the compounds to form a mixture; and
then firing the mixture at a temperature between about 900°C and about 1700°C under a reducing atmosphere for a sufficient period of time to convert the mixture to a phosphor of the general formula of any of Claims 1, 3 and 6.

8. The method of claim 7, wherein the oxygen-containing compounds are selected from the group consisting of oxides, carbonates, citrates, carboxylates, and combinations thereof.

9. The method of any of claims 7 - 8, wherein the nitrogen-containing compounds comprises a solid nitride.

10. An article of manufacture containing a phosphor, comprising:
a structure; and
a phosphor comprising a general formula of any of Claims 1 - 6.

11. The article of manufacture of claim 10, wherein the structure is selected from the group consisting of safety equipment, toys, input devices, signs, emergency exit indicators, instrument panel controls, electrical switches, circuit breaker switches, furniture, communication devices, wristwatch faces, cell phones, keyboards, numbers on a wristwatch face, clock faces, numbers on a clock face, kitchen ware, utensils, labels, car dashboard controls, stair treads, clothing, lamps, weapon sights, a textile and displays.

12. The article of manufacture of any of claims 10 - 11, wherein the phosphor is incorporated into the material of the structure, and/or the phosphor is incorporated into a film attached to the structure, and/or the phosphor is incorporated into a paint composition applied to the structure.

13. The article of manufacture of any of claims 10- 12, wherein the structure comprises a thermoplastic matrix selected from the group consisting of polystyrene, high impact polystyrene (HIPS), styrene-butadiene copolymer, polycarbonate, polyethylene, polyurethane, polyethylene terephthalate (PET), polyethylene terephthalate glycol (PETG), polypropylene, and combinations thereof.

14. The article of manufacture of any of claims 10- 13, wherein the structure comprises a thermoset plastic matrix selected from the group consisting of silicone RTV resin, epoxy resin, polyester, phenol-formaldehyde resin, melamine, and combinations thereof.

15. The article of manufacture of any of claims 10- 14, wherein the structure comprises a glass, a ceramic, or a combination thereof.

## Patentansprüche

1. Material, das einen Leuchtstoff umfasst, der eine allgemeine Formel
A₃M₁₀₋ₓC₁₊ₓ(O₂₀₋ₓNₓ):Eu, RE
umfasst, wobei A Ba, Sr, Ca, K, Na oder eine Kombination davon ist,
M Al, B, Zn, Co, Ga, Sc oder eine Kombination davon ist,
C Si oder Ge oder eine Kombination davon ist;
x zwischen 0,001 und 5,0 beträgt; und
RE Dy, Nd, Er, Ho, Tm, Yb, Sm oder eine Kombination davon ist.

2. Material, das einen Leuchtstoff umfasst, der eine allgemeine Formel A₃M₁₀C₁(O₂₀):Eu, Er umfasst, wobei A Sr ist, M eine Kombination aus Al und B ist, und C Si ist.

3. Das Material nach Anspruch 1, wobei A Sr ist, M Al ist, und C Si ist.

4. Das Material nach Anspruch 1, wobei A Sr ist, C Si ist, und M eine Kombination aus Al und B ist.

5. Das Material nach einem der Ansprüche 1, 3 und 4, wobei RE Er ist.

6. Das Material nach Anspruch 1, wobei der Leuchtstoff die Formel (Sr_{2.96}Eu_{0.01}Er_{0.03})Al_{9.4}B_{0.4}Si_{1.2}O_{19.8}N_{0.2} aufweist.

7. Verfahren zur Herstellung eines Leuchtstoffs, wobei das Verfahren umfasst:
Bereitstellen von Mengen Stickstoff enthaltender Verbindungen, Sauerstoff enthaltender Verbindungen von Europium, RE oder einer mitgefällten Mischung aus Sauerstoff enthaltenden Verbindungen, zumindest einem Alkalimetall oder einem Erdalkalimetall, das ausgewählt ist aus der Gruppe bestehend aus Ba, Sr, Ca, K, Na und Kombinationen davon, zumindest einem Metall, das ausgewählt ist aus der Gruppe bestehend aus Al, B, Zn, Co, Ga, Sc und Kombinationen davon, und zumindest einem Metall, das ausgewählt ist aus der Gruppe bestehend aus Si, Ge und Kombinationen davon, wobei RE zumindest eines von Dy, Nd, Er, Ho, Tm, Yb, Sm ist;
Vermischen der Verbindungen, um eine Mischung zu bilden; und anschließend Brennen der Mischung bei einer Temperatur zwischen ungefähr 900°C und ungefähr 1700°C unter einer reduzierenden Atmosphäre für eine ausreichende Zeitdauer, um die Mischung in einen Leuchtstoff der allgemeinen Formel nach einem der Ansprüche 1, 3 und 6 umzuwandeln.

8. Verfahren nach Anspruch 7, wobei die Sauerstoff enthaltenden Verbindungen ausgewählt sind aus der Gruppe, die aus Oxiden, Carbonaten, Citraten, Carboxylaten und Kombinationen davon besteht.

9. Verfahren nach einem der Ansprüche 7 - 8, wobei die Stickstoff enthaltenden Verbindungen ein festes Nitrid umfassen.

10. Herstellungsartikel, der einen Leuchtstoff enthält, umfassend:
eine Struktur; und
einen Leuchtstoff, der eine allgemeine Formel nach einem der Ansprüche 1 - 6 umfasst.

11. Herstellungsartikel nach Anspruch 10, wobei die Struktur ausgewählt ist aus der Gruppe, die besteht aus: Sicherheitsausrüstung, Spielzeugen, Eingabegeräten, Schildern, Notausgangshinweisen, Steuerelementen von Instrumententafeln, elektrischen Schaltern, Stromunterbrecherschaltern, Möbeln, Kommunikationsgeräten, Armbanduhrzifferblättern, Mobiltelefonen, Tastaturen, Zahlen auf einem Armbanduhrzifferblatt, Uhrenzifferblätter, Zahlen auf Uhrenzifferblättern, Küchengeschirr oder -geräten, Utensilien, Etiketten, Steuerelementen von Autoarmaturenbrettern, Treppenlaufflächen, Bekleidung, Lampen, Waffenzielvorrichtungen, ein Textil und Anzeigevorrichtungen.

12. Herstellungsartikel nach einem der Ansprüche 10 - 11, wobei der Leuchtstoff in das Material der Struktur eingearbeitet ist und/oder der Leuchtstoff in eine an der Struktur befestigte Folie eingearbeitet ist, und/oder der Leuchtstoff in eine auf die Struktur aufgebrachte Lackzusammensetzung eingearbeitet ist.

13. Herstellungsartikel nach einem der Ansprüche 10 - 12, wobei die Struktur eine thermoplastische Matrix umfasst, die ausgewählt ist aus der Gruppe, die aus Polystyrol, hochschlagfestem Polystyrol (high impact polystyrene, HIPS), Styrol-Butadien Copolymer, Polycarbonat, Polyethylen, Polyurethan, Polyethylenterephthalat (PET), Polyethylenterephthalat Glykol (PETG), Polypropylen und Kombinationen davon besteht.

14. Herstellungsartikel nach einem der Ansprüche 10 - 13, wobei die Struktur eine wärmehärtbare Kunststoffmatrix umfasst, die ausgewählt ist aus der Gruppe, die aus Silikon-RTV-Harz, Epoxidharz, Polyester, Phenol-Formaldehyd-Harz, Melamin und Kombinationen davon besteht.

15. Herstellungsartikel nach einem der Ansprüche 10 - 14, wobei die Struktur ein Glass, eine Keramik oder eine Kombination davon umfasst.

## Revendications

1. Matériau qui comprend un phosphore comprenant une formule générale de :
A₃M₁₀₋ₓC₁₊ₓ(O₂₀₋ₓNₓ) : Eu, RE
dans lequel A représente Ba, Sr, Ca, K, Na ou une combinaison de ceux-ci,
M représente Al, B, Zn, Co, Ga, Sc ou une combinaison de ceux-ci,
C représente Si ou Ge ou une combinaison de ceux-ci,
X est compris entre 0,001 et 5,0 ; et
RE représente Dy, Nd, Er, Ho, Tm, Yb, Sm ou une combinaison de ceux-ci.

2. Matériau qui comprend un phosphore comprenant une formule générale de :
A₃M₁₀C₁(O₂₀) :Eu, RE
dans lequel A représente Sr, M est une combinaison de Al et de B, et C représente Si.

3. Matériau selon la revendication 1, dans lequel A représente Sr, M représente Al et C représente Si.

4. Matériau selon la revendication 1, dans lequel A représente Sr, C représente Si, et M est une combinaison de Al et de B.

5. Matériau selon l'une quelconque des revendications 1, 3 et 4, dans lequel RE représente Er.

6. Matériau selon la revendication 1, dans lequel le phosphore possède la formule :
(Sr_{2,96}Eu_{0.01}Er_{0,03})Al_{9,4}B_{0,4}Si_{1,2}O_{19,8}N_{0,2}.

7. Procédé de production d'un phosphore, le procédé consistant à :
fournir des quantités des composés contenant de l'azote, des composés d'europium contenant de l'oxygène, de RE, ou d'un mélange coprécipité de composés contenant de l'oxygène, au moins un métal alcalin ou un métal alcalino-terreux choisi parmi le groupe constitué de Ba, Sr, Ca, K, Na et des combinaisons de ceux-ci, au moins un métal choisi parmi le groupe constitué de Al, B, Zn, Co, Ga, Sc et des combinaisons de ceux-ci, et au moins un métal choisi parmi le groupe constitué de Si et Ge et des combinaisons de ceux-ci, dans lequel RE représente au moins un des Dy, Nd, Er, Ho, Tm, Yb, Sm ;
mélanger ensemble les composés afin de former un mélange ; et
ensuite chauffer à la flamme le mélange à une température comprise entre 900 °C et environ 1700 °C sous une atmosphère réductrice pendant une période de temps suffisante pour convertir le mélange en un phosphore de formule générale selon l'une quelconque des revendications 1, 3 et 6.

8. Procédé selon la revendication 7, dans lequel les composés contenant de l'oxygène sont choisis parmi le groupe constitue des oxydes, des carbonates, des citrates, des carboxylates, et des combinaisons de ceux-ci.

9. Procédé selon l'une quelconque des revendications 7 et 8, dans lequel les composés contenant de l'azote comprennent un nitrure solide.

10. Article de fabrication contenant un phosphore, qui comprend :
une structure ; et
un phosphore qui comprend une formule générale selon l'une quelconque des revendications 1 à 6.

11. Article de fabrication selon la revendication 10, dans lequel la structure est choisie parmi le groupe constitué des équipements de sécurité, des jouets, des dispositifs d'entrée, des signes, des indicateurs de sortie de secours, des commandes de tableau de bord, d'interrupteurs électriques, d'interrupteurs de disjoncteurs, de meubles, de dispositifs de communication, d'habillages de montre-bracelet, de téléphones portables, de claviers, de nombres sur un habillage de montre-bracelet, des ustensiles de cuisine, des ustensiles, des étiquettes, des commandes pour tableaux de bord de voitures, des marches d'escalier, des vêtements, des lampes, des lunettes d'armes, d'un textile et d'étalages.

12. Article de fabrication selon l'une quelconque des revendications 10 et 11, dans lequel le phosphore est incorporé au sein du matériau de la structure, et/ou le phosphore est incorporé au sein d'un film attaché à la structure, et/ou le phosphore est incorporé au sein d'une composition de peinture appliquée à la structure.

13. Article de fabrication selon l'une quelconque des revendications 10 à 12, dans lequel la structure comprend une matrice thermoplastique choisie parmi le groupe constitué du polystyrène, du polystyrène à haute résistance aux chocs (HIPS), du copolymère de styrène-butadiène, du polycarbonate, du polyéthylène, du polyuréthane, du polytéréphtalate d'éthylène (PET), du polytéréphtalate d'éthylène glycol (PETG), du polypropylène, et de combinaisons de ceux-ci.

14. Article de fabrication selon l'une quelconque des revendications 10 à 13, dans lequel la structure comprend une matrice plastique thermodurcissable choisie parmi le groupe constitué d'une résine de silicone de type RTV, d'une résine époxy, d'un polyester, d'une résine de phénol-formaldéhyde, de mélamine, et de combinaisons de ceux-ci.

15. Article de fabrication selon l'une quelconque des revendications 10 à 14, dans lequel la structure comprend un verre, une céramique, ou une combinaison de ceux-ci.
